# EUROPÄISCHE PATENTANMELDUNG

(11) **EP 1 285 797 A1**
(43) Veröffentlichungstag der Anmeldung: **26.02.2003**
(21) Anmeldenummer: 02016702.9
(22) Anmeldetag: 26.07.2002
(51) Int. Cl.: B60J 7/02

(54) **Karosseriefeste Führungsschiene für ein verstellbares Element einer Fahrzeugkarosserie**

(30) Priorität: 07.08.2001 DE 10137958
(71) Anmelder: Webasto Vehicle Systems International GmbH, 82131 Stockdorf (DE)
(72) Erfinder: Losert, Andreas, 82211 Herrsching (DE)
(74) Vertreter: Konnerth, Dieter Hans

(57) **Zusammenfassung**

Die Erfindung betrifft eine karosseriefeste Führungsschiene für ein verstellbares Element einer Fahrzeugkarosserie. Die Führungsschiene (10) wird von einem Metallprofil (32) gebildet wird, welches mit Kunststoff (30) umspritzt ist.

## Beschreibung

Die vorliegende Erfindung betrifft eine karosseriefeste Führungsschiene für ein verstellbares Element einer Fahrzeugkarosserie, insbesondere für einen verstellbaren Spoiler oder ein verstellbares Fahrzeugdach, sowie ein Verfahren zum Herstellen derselben.

Üblicherweise sind Führungsschienen für verstellbare Fahrzeugdächer, wie z. B. Schiebedächer, als Metallprofile, z.B. Strangpressprofile, ausgebildet, wobei je nach Anwendung eine kostenintensive Nachbearbeitung, beispielsweise zur Herstellung von Ausnehmungen und ähnlichem mittels Fräsvorgängen, erforderlich ist und wobei ferner zusätzlich die Montage von Anbauteilen, wie z.B. Gummidämpfern, Dämpfungselementen, Nietmuttern und Anschlagstiften, an dem Profil erforderlich sein kann. Je nach Anwendung kann eine solche Führungsschiene sehr kostenintensiv und zeitintensiv in der Fertigung sein, wobei ferner zahlreiche Fehlermöglichkeiten bestehen.

Aus der WO 00/35705 ist eine Führungsschiene für Kraftfahrzeugkomponenten bekannt, welche mindestens im Bereich der Führungsflächen mit einer Gleitbeschichtung versehen ist, wobei die Führungsschiene hergestellt wird, indem auf ein Metallband kontinuierlich eine Gleitbeschichtung aufgebracht wird, das beschichtete Band auf Länge und Breite geschnitten wird und die geschnittenen Bandabschnitte umgeformt werden.

Aus der DE 198 20 699 C1 ist eine Führungskulisse für den Deckel eines Schiebehebedaches bekannt, welche aus Kunststoff gefertigt ist, wobei die Schlitzweite des Führungsschlitzes im Endbereich durch eine federelastische oder federelastisch abgestützte Schlitzwand verengt ist.

Es ist Aufgabe der vorliegenden Erfindung, eine karosseriefeste Führungsschiene für ein verstellbares Element einer Fahrzeugkarosserie zu schaffen, welche funktional hochwertig ist und insbesondere auch komplexe Funktionen darstellen kann, während sie dennoch kostengünstig und zeitsparend hergestellt werden kann. Ferner soll ein entsprechendes Herstellungsverfahren geschaffen werden.

Diese Aufgabe wird erfindungsgemäß durch eine Führungsschiene gemäß Anspruch 1 sowie durch ein entsprechendes Herstellungsverfahren gemäß Anspruch 12 gelöst.

Da die Führungsschiene von einem mit Kunststoff umspritzten Metallprofil gebildet wird, kann vorteilhafterweise ein einfach und kostengünstig herzustellendes Metallprofil verwendet werden, das ohne aufwendige Nachbearbeitung dergestalt mit Kunststoff umspritzt werden kann, dass eine komplexe Funktionalität der Führungsschiene erzielt werden kann. Insbesondere können durch die Kunststoffumspritzungen Aussparungen, Lagerstellen und eine komplexe Formgebung von Führungsflächen realisiert werden; ferner können Zusatzfunktionselemente, wie beispielsweise Anschlagstifte, Abdeckelemente oder Dämpfungselemente, nachgebildet werden. Außerdem können Zusatzteile, die sonst nachträglich montiert werden müssten, z. B. Nietmuttern, als Einlegeteile in das Kunststoffspritzgusswerkzeug kostengünstiger realisiert werden.

Bevorzugte Ausgestaltungen der Erfindung ergeben sich aus den Unteransprüchen.

Vorzugsweise bildet die Kunststoffumspritzung die Führungsflächen der Führungsschiene, die komplette Außenform der Führungsschiene und/oder Lagerstellen für andere Bauteile. Des weiteren können in der Kunststoffumspritzung zusätzlich zu dem Metallprofil Zusatzteile wie beispielsweise Nietmuttern mit umspritzt sein. Vorzugswiese bildet die Kunststoffumspritzung Zusatzfunktionselemente nach wie z. B. Anschlagstifte und/oder Abdeckkappen.

Das Metallprofil kann ein Strangpressprofil sein, das insbesondere aus Aluminium hergestellt ist, und es kann zweckmäßigerweise entgratet sein.

Wenn die Kunststoffumspritzung mit einer Zusatzumspritzung aus weicherem Material umspritzt ist, können Elastomerteile nachbildet werden. Die Elastomerteile sind beispielsweise Anschlagdämpfer und/oder Dichtschaumelemente.

Vorzugsweise ist die Kunststoffumspritzung aus einem Polyamid-Material hergestellt und insbesondere handelt es sich um ein hoch glasfaserverstärktes Polyamid-Material.

Im folgenden wird die Erfindung anhand der beigefügten Zeichnungen beispielhaft näher erläutert. Dabei zeigen:
- FIG. 1: eine perspektivische Ansicht einer erfindungsgemäßen Führungsschiene;
- FIG. 2: eine Aufsicht auf die Führungsschiene von FIG. 1;
- FIG. 3: einen Längsschiene entlang der Linie III-III von FIG. 2;
- FIG. 4: einen Schnitt entlang der Linie IV-IV von FIG. 2; und
- FIG. 5: einen Querschnitt durch eine erfindungsgemäße Führungsschiene gemäß einer zweiten Ausführungsform.

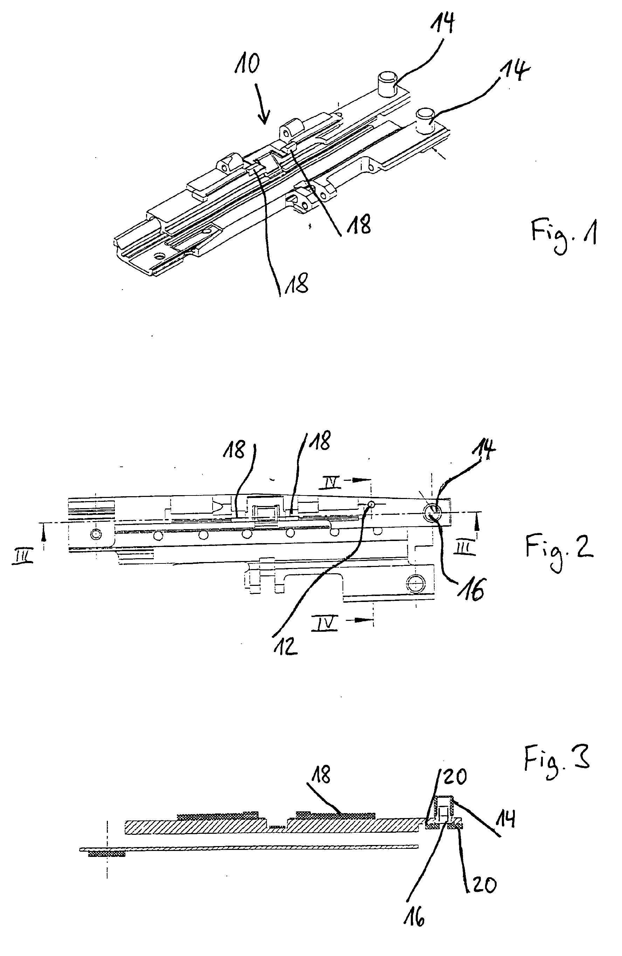

In den FIGN. 1 bis 4 ist eine Führungsschiene 10 für ein verstellbares Element einer Fahrzeugkarosserie dargestellt, die im gezeigten Beispiel eine karosseriefeste Führungsschiene für die Ausstellmechanik eines verstellbaren Heckspoilers ist. Die Führungsschiene 10 wird hergestellt, indem ein relativ einfach geformtes Aluminiumstrangpressprofil, welches abgelängt und entgratet wurde, in ein Kunststoffspritzgusswerkzeug eingelegt wird und mit Kunststoff umspritzt wird, um die endgültige Außenform der Führungsschiene einschließlich Lagerstellen und Freisparungen sowie Führungsflächen zu bilden. Bei dem Kunststoff kann es sich beispielsweise um hoch glasfaserverstärktes Polyamid-Material handeln, wie es beispielsweise unter der Bezeichnung Grivory erhältlich ist.

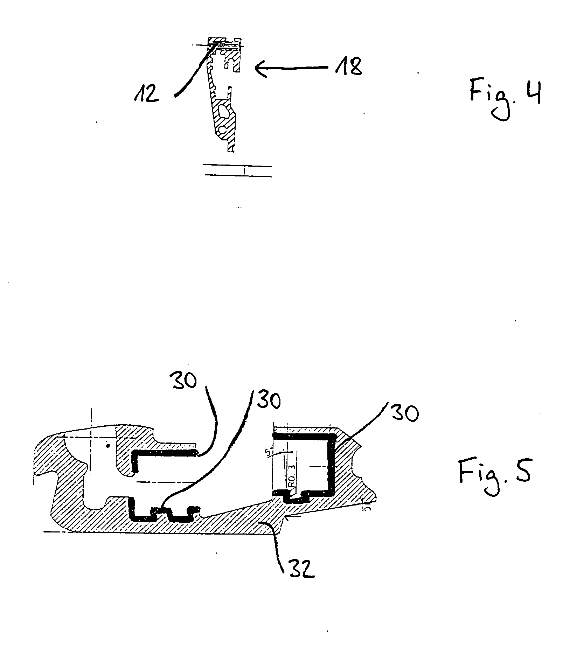

Außerdem können in dem Spritzgussvorgang Zusatzfunktionselemente durch die Kunststoffumspritzung nachgebildet werden, wie beispielsweise ein Anschlagstift 12 (siehe FIG. 4) oder eine Abdeckkappe 14 (siehe FIG. 3). Die Nachbildung von Zusatzfunktionselementen mittels Kunststoffumspritzung dient dazu, die aufwendige nachträgliche Montage solcher Elemente zu vermeiden.

Zusätzlich können in dem Spritzgussvorgang Zusatzteile, wie beispielsweise Nietmuttern 16, mit dem Aluminiumprofil zusammen in das Spritzgusswerkzeug eingelegt werden und so als Einlegeteile mitumspritzt werden. Auf diese Weise kann ebenfalls eine nachträgliche Montage solcher Zusatzteile an der Führungsschiene vermieden werden.

Ferner besteht die Möglichkeit, in einem zweiten, zusätzlichen Umspritzungsschritt an das bereits mit dem Grundwerkstoff umspritzte Profil weitere Zusatzfunktionselemente aus einem anderen Material zu umspritzen. Dabei kann es sich insbesondere um eine Zusatzumspritzung aus weicherem Material handeln, die Elastomerteile, wie beispielsweise Anschlagdämpfer 18 und/oder Dichtschaumelemente 20, nachbildet. Ein solcher Zusatzumspritzungsschritt kann in einem anderen Spritzgusswerkzeug als der erste Umspritzungsschritt oder auch in dem Spritzgusswerkzeug des ersten Umspritzungsschritts ausgeführt werden, wenn dieses als 2K-Werkzeug ausgebildet ist.

Das Aluminiumprofil kann relativ einfach geformt sein, da durch die Kunststoffumspritzung die endgültige Formgebung der Führungsschiene, insbesondere hinsichtlich Führungsflächen, Lagerstellen und Freisparungen, auf einfache Weise ohne aufwendige Nachbearbeitung des Aluminiumprofils realisiert werden kann. Dadurch kann auf kostengünstige Weise eine komplex geformte Führungsschiene hergestellt werden.

In FIG. 5 ist ein anderes Beispiel für eine Führungsschiene gezeigt, bei welcher Führungsflächen 30 von einer Kunststoffumspritzung gebildet werden, welche an ein Metallprofil 32 angespritzt sind.

In dem Spritzgusswerkzeug können auch mehrere Führungsschienen gleichzeitig hergestellt werden.

### Bezugszeichenliste

- 10: Führungsschiene
- 12: nachgebildeter Anschlagstift
- 14: nachgebildete Abdeckkappe
- 16: Nietmutter
- 18: Dämpfer
- 20: Dichtung
- 30: Metallprofil
- 32: Führungsflächen

## Patentansprüche

1. Karosseriefeste Führungsschiene für ein verstellbares Element einer Fahrzeugkarosserie,
**dadurch gekennzeichnet, dass** die Führungsschiene (10) von einem Metallprofil (32) gebildet wird, welches mit Kunststoff (30) umspritzt ist.

2. Führungsschiene nach Anspruch 1,
**dadurch gekennzeichnet, dass** die Kunststoffumspritzung die Führungsflächen (32) der Führungsschiene (10) bildet.

3. Führungsschiene nach Anspruch 1 oder 2,
**dadurch gekennzeichnet, dass** die Kunststoffumspritzung die komplette Außenform der Führungsschiene (10) bildet.

4. Führungsschiene nach Anspruch 3,
**dadurch gekennzeichnet, dass** die Kunststoffumspritzung Lagerstellen bildet.

5. Führungsschiene nach einem der vorhergehenden Ansprüche,
**dadurch gekennzeichnet, dass** in der Kunststoffumspritzung zusätzlich zu dem Metallprofil Zusatzteile (16) mit umspritzt sind.

6. Führungsschiene nach einem der vorhergehenden Ansprüche,
**dadurch gekennzeichnet, dass** die Kunststoffumspritzung Zusatzfunktionselemente (12, 14) nachbildet.

7. Führungsschiene nach einem der vorhergehenden Ansprüche,
**dadurch gekennzeichnet, dass** es sich bei dem Metallprofil um ein Strangpressprofil, insbesondere aus Aluminium, handelt.

8. Führungsschiene nach einem der vorhergehenden Ansprüche,
**dadurch gekennzeichnet, dass** das Metallprofil entgratet ist.

9. Führungsschiene nach einem der vorhergehenden Ansprüche,
**dadurch gekennzeichnet, dass** die Kunststoffumspritzung mit einer Zusatzumspritzung aus weicherem Material umspritzt ist, die Elastomerteile (18, 20) nachbildet.

10. Führungsschiene nach Anspruch 9,
**dadurch gekennzeichnet, dass** es sich bei den Elastomerteilen um Anschlagdämpfer (18) und/oder Dichtschaumelemente (20) handelt.

11. Führungsschiene nach einem der vorhergehenden Ansprüche,
**dadurch gekennzeichnet, dass** es sich bei der Kunststoffumspritzung um ein Polyamid-Material, insbesondere um ein hoch-glasfaserverstärktes Polyamid-Material, handelt.

12. Verfahren zum Herstellen einer karosseriefesten Führungsschiene, wobei
(a) ein Metallprofil in ein Kunststoffspritzgusswerkzeug eingelegt wird und
(b) das Metallprofil mit Kunststoff umspritzt wird.

13. Verfahren nach Anspruch 12,
**dadurch gekennzeichnet, dass** vor Schritt (a) das Metallprofil entgratet wird.

14. Verfahren nach Anspruch 12 oder 13,
**dadurch gekennzeichnet, dass** in Schritt (a) zusätzlich zu dem Metallprofil Zusatzteile (16) in das Werkzeug eingelegt werden, die in Schritt (b) mit umspritzt werden.

15. Verfahren nach einem der Ansprüche 12 bis 14,
**dadurch gekennzeichnet, dass** auf den Schritt (b) ein Schritt (c) folgt, in welchem die Führungsschiene mit einer Zusatzumspritzung aus weicherem Material umspritzt wird, die Elastomerteile (18, 20) nachbildet.

16. Verfahren nach Anspruch 15,
**dadurch gekennzeichnet, dass** der Schritt (c) ebenfalls in dem Werkzeug von Schritt (a) und (b) ausgeführt ist.
